(19) Europäisches Patentamt
European Patent Office
Office européen des brevets

(11) EP 2 543 631 B1

(12) **EUROPEAN PATENT SPECIFICATION**

(45) Date of publication and mention of the grant of the patent:
**01.10.2014 Bulletin 2014/40**

(51) Int Cl.:
***C01B 31/02*** *(2006.01)* ***B01J 21/18*** *(2006.01)*
***H01M 8/08*** *(2006.01)* ***H01M 4/96*** *(2006.01)*

(21) Application number: **11305867.1**

(22) Date of filing: **06.07.2011**

(54) **Method for preparing metal-free nitrogen-containing carbon nanotubes**

Verfahren zur Herstellung metallfreier stickstoffhaltiger Kohlenstoffnanoröhren

Procédé de préparation de nanotubes de carbone contenant de l'azote, dépourvus de métaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2013 Bulletin 2013/02**

(73) Proprietor: **Commissariat à l'Énergie Atomique et aux Énergies Alternatives**
**75015 Paris (FR)**

(72) Inventors:
- **Jousselme, Bruno**
  **91300 Massy (FR)**
- **Morozan, Adina-Mihaela**
  **91400 Orsay (FR)**

(74) Representative: **Leblois-Préhaud, Hélène Marthe Georgette et al**
**Cabinet Orès**
**36, rue de St Pétersbourg**
**75008 Paris (FR)**

(56) References cited:
**EP-A1- 2 180 539**

- **ZHIJIAN WANG ET AL: "Nitrogen-Promoted Self-Assembly of N-Doped Carbon Nanotubes and Their Intrinsic Catalysis for Oxygen Reduction in Fuel Cells", ACS NANO, vol. 5, no. 3, 22 March 2011 (2011-03-22), pages 1677-1684, XP55014402, ISSN: 1936-0851, DOI: 10.1021/nn1030127**
- **THARAMANI C. NAGAIAH ET AL: "Nitrogen-doped carbon nanotubes as a cathode catalyst for the oxygen reduction reaction in alkaline medium", ELECTROCHEMISTRY COMMUNICATIONS, vol. 12, no. 3, 1 March 2010 (2010-03-01), pages 338-341, XP55014390, ISSN: 1388-2481, DOI: 10.1016/j.elecom.2009.12.021**
- **AYALA P ET AL: "The doping of carbon nanotubes with nitrogen and their potential applications", CARBON, ELSEVIER, OXFORD, GB, vol. 48, no. 3, 1 March 2010 (2010-03-01), pages 575-586, XP026804726, ISSN: 0008-6223 [retrieved on 2009-10-13]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 543 631 B1

## Description

The present invention relates to a method for preparing metal-free nitrogen-containing carbon nanotubes (NCNTs) having a core/shell structure, in which the core is composed of carbon and the shell is mainly composed of carbon and nitrogen. The invention also relates to metal-free nitrogen-containing carbon nanotubes (NCNTs) obtainable by said method and to their use as a catalyst for oxygen reduction reactions, notably in alkaline media in fuel cells.

Carbon nanotubes (CNTs), due to their unique physicochemical properties and availability, have found various applications in the field of energy storage devices, especially providing the improvement of electrode performance due to their mesoporous and well conducting networks.[1] Tuning the physicochemical properties of CNTs by controlling the location of defects or heteroatoms in the layered $sp^2$ carbon system is a feasible path to extend the applications area.[2] Hence, nitrogen-doped carbon nanotubes (NCNTs) promise to be a good alternative in the area of catalysis in fuel cells, as they are catalytically active toward oxygen reduction reaction (ORR) without any costly catalyst material, as a result of the conjugation between the nitrogen lone-pair electrons and the graphene $\pi$-system.[3-8] The doping of the CNTs framework with nitrogen induces a charge delocalization of carbon atoms which favors the chemisorption of $O_2$, promotes the O-O bonding to NCNTs and improves the ORR.[9, 10] Hence, NCNTs offer a valuable alternative to the currently used but costly platinum (Pt)-based catalysts,[11, 12] especially in the change from an acidic medium in polymer electrolyte membrane fuel cells (PEMFCs) to an alkaline one in alkaline fuel cells (AFCs) devices. Indeed, in alkaline conditions the cathode oxygen reduction over-potential is considerably reduced and stability enhanced, leading to improve fuel cell efficiency.

The doping of CNTs with nitrogen is mainly carried out by two methods: either in situ during the CNTs synthesis, or through post-treatment of regular CNTs. The direct synthesis of NCNTs is usually reached by thermal decomposition of nitrogen-containing carbon precursors over metal catalysts by chemical vapor deposition, [4,13] carbon arc discharge,[14] laser-ablation[15] or template synthesis using precursors such as polyvinyl pyrrolidone[16] and polypyrrole.[17] However, the strong oxidative conditions often applied to remove metal catalysts after the synthesis could destroy the local structure at nitrogen-carbon sites and affect the electrochemical performances.[18] Otherwise, the post-doping of CNTs is typically carried out by treating them with $NH_3$[19] or with nitrogen ions ($N^+$) generated by mass-separated low-energy ion beam irradiation,[20] or by coating CNT surfaces with nitrogen-containing species (e.g., polyaniline).[21] Mostly, these methods lead to three main doping types: 1. exohedral doping which corresponds to an intercalation between the outer shells of the tubes 2. endohedral doping which is an encapsulation in the hollow core of the tubes, and 3. in-plane doping by the replacement of carbon atoms by nitrogen.[2]

It now has been found a very simple and low cost method for preparing efficient metal-free nitrogen-containing carbon nanotubes (NCNTs) catalysts (Figure 1). More specifically, this method is based on the selection and use of N-rich nitrogen precursors, such as triazole and tetrazole derivatives, that have the ability to decompose and generate, under annealing, highly reactive radicals able to react with CNTs and tune their physicochemical properties of CNTs. These N-containing precursors with aromatic ring containing several nitrogen atoms are assumed to release dinitrogen upon heating to give highly reactive radicals which eventually lead to nitrogen-enriched CNTs.[22-24]

Further, the obtained NCNTs tested by voltamperometry methods display a similar electrocatalytic activity, with only 80 mV of overpotential (the difference between thermodynamic and formal potentials), than that of commercially available or similar platinum-based electrodes in alkaline electrolytes. The obtained catalysts also show an excellent tolerance to methanol oxidation which is not the case for Pt/C catalysts. Thus, tuning the type and amount of nitrogen in NCNTs is a viable alternative for metal-free electrode catalysts for Oxygen Reduction Reactions.

Thus, in one aspect, the invention relates to a method for preparing metal-free nitrogen-containing carbon nanotubes (NCNTs), said method comprising the steps consisting of:

i) Impregnating carbon nanotubes (CNTs) with a solvent comprising a nitrogen-containing precursor dissolved therein, said nitrogen-containing precursor comprising an heteroaryl group in which the ring portion contains at least one nitrogen atom covalently bound to two other nitrogen atoms ;

ii) Recovering and annealing the obtained impregnated CNTs in conditions of temperature and pressure allowing to obtain the withdrawal of $N_2$ and the formation of radicals, thereby obtaining metal-free nitrogen-containing carbon nanotubes (NCNTs).

The following terms and expressions used herein have the indicated meanings.

As used herein, the term "about" refers to a range of values from $\pm$ 10% of a specified value. For example, the phrase "about 50 mg" includes $\pm$ 10% of 50, or from 45 to 55 mg.

As used herein, a range of values in the form "x-y" or "x to y", or "x through y", include integers x, y, and the integers there between. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

As used herein, "metal-free" refers to nitrogen-containing carbon nanotubes (NCNTs) which level of metal elements, such as Fe, Co, Pt, is inferior to 0.01%, this percentage ratio referring to the number of metal atoms relative to the number of carbon atoms. This level of metal impurities which mainly depends on the method of preparation of CNTs, may be easily determined by XPS (X-ray Photoelectron Spectroscopy) analysis.

As used herein, the terms "nitrogen-containing precursor comprising an heteroaryl group", refer to nitrogen-containing precursor comprising a mono- di-, tri- or other multicyclic aromatic ring system that includes nitrogen as heteroatom. The aromatic ring system group can be substituted or unsubstituted, fused or not. Preferred ring sizes range from 5 to 7 ring atoms. Preferably, the heteroaryl group only includes nitrogen as heteroatom.

As used herein, the terms "in which the ring portion contains at least one nitrogen atom covalently bound to two other nitrogen atoms" means that the ring portion contains at least three contiguous nitrogen atoms, *i.e* that the three nitrogen atoms are directly connected *via* a single or a double bond.

Heteroaryl groups containing three contiguous nitrogen atoms may be selected from polyazoles, notably triazole, tetrazole and pentazole groups. Of these, triazole and tetrazole groups are particularly preferred. As examples of heteroaryl groups, mention may be made of 1H-benzotriazole (BTA), or 1H-1,2,3-triazolo[4,5-b]pyridine (TAPy).

The aromatic ring system can be substituted by one or more groups, notably selected from $C_1$-$C_6$ alkyl, $C_6$-$C_{10}$ aryl, 5 to 7 membered heteroaryl, primary ($NH_2R^a$), secondary ($NHR^aR^b$), and tertiary ($NR^aR^bR^c$) amine, ammonium ($NH_4^+$), nitro ($NO_2$), cyano (CN), amide ($C(=O)NH_2$), carboxylic acid (C(=O)OH), sulfonic acid ($SO_3H$), phosphonic acid ($P(=O)(OH)_2$), ester (C(=O)OR), aldehyde (C(=O)H) and halogens (Cl, Br, I, or F).

As used herein, the wording "5 to 7 membered heteroaryl" as a substituent of the aromatic ring system, refers to an aryl group containing 5 to 10 ring carbon atoms in which one or more ring carbon atoms are replaced by at least one hetero atom such as -O-, -N-, -S-, or phosphorus, preferably nitrogen atoms. Some heteroaryl groups of the present invention include pyridyl, pyrimidyl, pyrrolyl, furanyl, thienyl, imidazolyl, triazolyl,or tetrazolyl.

R, $R^a$, $R^b$, $R^c$, each independently, may be selected from the group consisting of $C_1$-$C_6$ alkyl, $C_6$-$C_{10}$ aryl, or arylalkyl.

As used herein, the term "alkyl" refers to a straight-chain, or branched alkyl group having 1 to 6 carbon atoms, such as methyl, ethyl, propyl, isopropyl, butyl, isobutyl, hexyl. Lower alkyl groups, which are preferred, are alkyl groups as defined above which contain 1 to 4 carbons.

As used herein, the term "aryl" refers to a mono- or bicyclic hydrocarbon aromatic ring system having 6 to 12 ring carbon atoms. Examples include phenyl and naphthyl. Preferred aryl groups include phenyl or naphthyl groups. Included within the definition of "aryl" are fused ring systems, including, for example, ring systems in which an aromatic ring is fused to a cycloalkyl ring. Examples of such fused ring systems include, for example, indane and indene.

As used herein, the term "arylalkyl" refers to an alkyl group that is substituted with an aryl group, the alkyl and aryl groups being as defined above. Examples of arylalkyl groups include, but are not limited to, benzyl, phenethyl, benzhydryl, diphenylmethyl, triphenylmethyl, diphenylethyl, naphthylmethyl, etc.

<u>*Step i)*</u>

In step i), the CNTs are contacted with a solution containing a nitrogen-containing precursor dissolved in a solvent. Generally, prior to step i), the CNTs are suspended in a solvent, which is preferably the same as that in which the N-containing precursor are dissolved. The suspension of CNTs is typically obtained under ultrasounds.

There is no particular restriction on the nature of the solvent to be employed, provided that it has no adverse effect on the impregnation or on the starting materials involved, and that it is able to dissolve the N-containing precursor. The solvent is preferably an organic solvent, more preferably a polar solvent. Examples of suitable solvents include alcohols, notably monoalcohols, in particular having 1 to 5 carbon atoms such as methanol, ethanol, butanol, isopropanol, or mixtures thereof. Other examples of suitable solvents include notably acetone, methylene chloride.

The solution containing the nitrogen-containing precursors is then added to CNTs' suspension. The obtained mixture is then generally stirred under reflux conditions during a sufficient period to obtain the impregnation of CNTs.

The impregnation time may vary in a wide range and is generally not critical. Typically, the impregnation is performed during a period of 30 minutes to 6 hours, notably of 1 hour to 3 hours.

The impregnation can take place over a wide range of temperatures, and the precise reaction temperature is not critical to the invention. In general, it has been found convenient to carry out the reaction at a temperature of from about 0°C to about 100°C, more preferably from about room temperature, *i.e* 20°C to about 90°C.

The time required for the reaction may also vary widely, depending on many factors, notably the reaction temperature and the nature of the reagents. However, provided that the reaction is performed under the preferred conditions outlined above, a period of from about 3 hours to about 10 hours will usually suffice. As an example, when step i) is performed in ethanol as a solvent, the impregnation of CNTs may be effected under stirring, at 60°C for 5 hours.

The nitrogen-containing precursors comprise an heteroaryl group in which the ring portion contains at least one nitrogen atom covalently bound to two other nitrogen atoms, preferably as follows :-N=N-N($R_1$)-, wherein $R_1$ is H

or forms with the nitrogen atom to which it is attached, an aromatic ring system (Het) as follows :

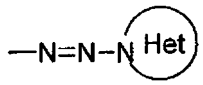

Preferably, the heteroaryl cycle of the N-containing precursor is selected from triazolyl or tetrazolyl cycles.
Examples of nitrogen-containing precursors include 1H-benzotriazole (BTA), 1H-1,2,3-triazolo[4,5-b]pyridine (TAPy), and 5-(2-pyridyl)-1H-tetrazole (PyTZ), and [1,2,3]triazolo[1,5-a]pyridine (TAP).

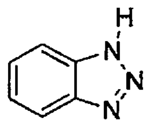

BTA

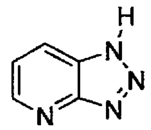

TAPy

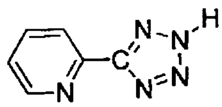

PyTZ

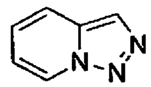

TPA

These heteroaryl cycles advantageously exhibit decomposition ability under heating process. These compounds with aromatic ring containing several nitrogen atoms release nitrogen upon heating to give highly reactive radicals which eventually lead to nitrogen-enriched CNTs.[22-24]
The CNTs may be selected from single wall, double wall and multi-walls carbon nanotubes (CNTs). Of these, multi-walls CNTs (MTCNTs) or double-walls CNTs are preferred.
Actually, CNTs have a high surface area which may vary according to their intrinsic characteristics (diameter, number of walls, and number of nanotubes in a bundle) and electronic properties consistent with their incorporation in electrocatalytic devices [24a, 24b]. SWCNTs are typically composed of a statistical distribution of metallic (1/3) and semiconducting (2/3) nanotubes. MWCNTs may be seen as an assembly of several concentric SWCNTs.
As a result, the probability to have a MWCNT totally formed by semiconducting SWCNTs is very negligible ; thus MWCNTs are generally mainly metallic and show a greater conductivity than SWCNTs [24c].
In accordance with a preferred embodiment, CNTs have a conductivity comprised in the range of $10^{-2}$ S/cm and $10^4$ S/cm. Indeed, it has been found that the intensity of the catalytic current increases with the CNTs' conductivity.
Preferably, the weight ratio of the nitrogen-containing precursor relative to the CNTs is in the range of 1,5/1 to 3/1, preferably of about 2/1.

*Step ii)*

In step ii), the obtained impregnated CNTs are preferably recovered by evaporating the solvent under a reduced pressure.
The recovered impregnated CNTs are then generally placed under an inert atmosphere before annealing, so as to remove any residual air from the impregnated CNTs before increasing the temperature and thus avoid the formation of undesirable byproducts which could result from the reaction with the radical species formed during the annealing step. Typically, the recovered impregnated CNTs are placed in a tube furnace under argon during 2 hours.
The recovered impregnated CNTs are then annealed, preferably at a temperature in the range of 600°C to 800°C, more preferably of about 700°C. This temperature is generally sufficient to enable the elimination of $N_2$ and the formation of radicals.
The annealing temperature may vary notably with the N-precursor, the ratio of N-precursor/CNTs. It may however be easily determined by performing routine tests, for example by predetermining by DSC (Differential Scanning Calorimetry) the temperature $\theta$ at which the nitrogen-containing precursor yields $N_2$ to form a biradical species. The annealing temperature is generally superior to the temperature $\theta$. The annealing conditions may then be optimized according to routine tests, by assessing the performances of NCNTs obtained at different annealing temperatures, for example by voltamperometry
The temperature of the recovered impregnated CNTs may thus be gradually increased, for example with a ramping rate of 5°C/min, until the desired annealing temperature is reached. The CNTs may then be maintained at this temperature for 1 to 5 hours, notably for about 2 hours. The obtained annealed CNTs may then be cooled down to the room temperature at a temperature rate of about - 5°C/min.
As used herein, the term "annealing" refers to a thermochemical decomposition of the N-containing precursors, which is performed at a high temperature, in the absence of oxygen, notably under an inert atmosphere, notably under $N_2$ or Ar atmosphere.

In a second aspect, the invention relates to a metal-free nitrogen-containing carbon nanotube (NCNT) obtainable by the method of the invention.

In a further aspect, the invention relates to a free-metal catalyst for reducing oxygen comprising a metal-free nitrogen-containing carbon nanotube (NCNT) according to the invention.

In yet a further aspect, the invention relates to a use of a metal-free nitrogen-containing carbon nanotube (NCNT) of the invention or of a free-metal catalyst of the invention, for reducing oxygen, preferably in an alkaline medium for example in a fuel cell, for example in combination with a solution of a ionomer such as Nation or in catalytic inks.

Advantageously, an overpotential of 250 mV may be obtained for a current intensity two fold lower as compared to Pt/C catalysts.

In still another aspect, the invention relates to the use of a nitrogen-containing precursor for modifying carbon-nanotubes, said nitrogen-containing precursor comprising an heteroaryl in which the ring portion contains at least one nitrogen atom covalently bound to two other nitrogen atoms.

The NCNTs catalysts of the invention, their methods or preparation and their catalytic activity will appear more clearly from the examination of the following examples which are presented as an illustration only and are not to be considered as limiting the invention in its scope.

The starting materials are commercially available and/or may be prepared by the application or adaptation of known methods.

FIGURES

Figure 1: Chemical structures of nitrogen-containing precursors and schematic representation for the synthesis of NCNTs.
Figure 2: Cyclic voltammograms of NCNTs catalysts in 0.1 M KOH electrolyte (scan rate: 20 mV $s^{-1}$),
Figure 3: Decomposed XPS N 1s spectra of NCNTs after heat-treatment at 700 °C.
Figure 4:

(a). Polarization curves at different rotation rates recorded for ORR in $O_2$-saturated 0.1 M KOH solution (scan rate: 5 mV $s^{-1}$);
(b). Koutecky-Levich plots at -0.5 V vs. SCE derived from polarization curves for NCNTs catalysts, CNTs and Pt/C.

Figure 5: RRDE measurements for CNTs, NCNTs, and Pt/C catalysts in $O_2$-saturated 0.1 M KOH. The ring electrode was polarized at 0.456 V vs. SCE (5 mV $s^{-1}$, 800 rpm).
Figure 6:

(a). Dependence of the current density for ORR at -0.5V and $E_{1/2}$ on the potential cycles evaluated from the cyclic voltammograms.
(b). Current-time (I-t) response of NCNTs (BTA) and Pt/C at -0.35 V and 1500 rpm in 0.1 M KOH saturated with $N_2$ (0-1000s) or $O_2$ (1000-2000 s) and $O_2$-saturated 1 M $CH_3OH$ (2000-3000 s).

Figure 7: Cyclic voltammograms of CNTs catalyst in $N_2$-saturated (a) and $O_2$-saturated (b) 0.1 M KOH electrolyte (scan rate: 20 mV $s^{-1}$).
Figure 8: Polarization curves at different rotation rates recorded for ORR in $O_2$-saturated 0.1 M KOH solution on

(a). CNTs,
(b). NCNTs (TAPy),
(c). NCNTs (PyTZ), and
(d). Pt/C catalysts (scan rate: 5 mV $s^{-1}$).

Figure 9: XPS spectra of NCNTs (TAPy) after heat-treatment at 700 °C.

EXAMPLES

Materials and methods

The preparation of the different NCNTs was realized by the impregnation of CNTs with nitrogen-containing

precursors in ethanol under stirring at 60°C for 5 h. The weight ratio of N-precursor/CNTs was 2:1 in weight in each case. Then, ethanol was removed and the blend was dried under vacuum before the annealing at 700°C under Ar.

The catalytic properties of these materials were assessed by cyclic voltamperometry, rotating disk electrode (RDE) and ring-rotating disk electrode (RRDE) measurements. The electrochemical measurements were conducted in $N_2$- or $O_2$-saturated 0.1 m KOH solution in a three-electrode cell using a ring-disk electrode setup with a bipotentiostat (Model VSP Bio-Logic SAS) and rotation control unit (Princeton, Model 636). Catalyst inks were dropped on a 5 mm glassy carbon disk electrode. Graphite plate and saturated KCl calomel electrode (SCE) served as the counter and reference electrode, respectively. All potentials are referenced to SCE.

X-ray photoelectron spectroscopic (XPS) measurements were performed on a Kratos Analytical Axis Ultra DLD system using an Al Kα source monochromatized at 1486.6 eV.

*Chemicals.*

All chemicals used in our experiments were obtained in the highest purity from Sigma Aldrich. The electrolyte used, 0.1M KOH, was prepared with ultrapure water (18.2 MΩ·cm resistivity at 25°C). All gases (nitrogen, oxygen) were 99.995% purity. Commercial grade NC3100 multi-wall carbon nanotubes (CNTs) (purity > 95%) were purchased from Nanocyl, and used as received.

*Equations.*

$$O_2 + H_2O + 2e^- \rightarrow HO_2^- + OH^- \quad (1)$$

$$HO_2^- + H_2O + 2e^- \rightarrow 3OH^- \quad (2)$$

$$2HO_2^- \leftrightarrow O_2 + 2OH^- \quad (3)$$

$$O_2 + 2H_2O + 4e^- \rightarrow 4OH^- \quad (4)$$

*Synthesis.*

The NCNTs catalysts for the ORR were prepared as follows: 400 mg of nitrogen-containing precursor (1H-benzotriazole (BTA), 1H-1,2,3-triazolo[4,5-b]pyridine (TAPy), and 5-(2-pyridyl)-1H-tetrazole (PyTZ), respectively) was dissolved in ethanol (30 mL). Then, a suspension of CNTs (200 mg) in ethanol (100 mL) obtained under ultrasound (30 min.) was added to the previous one and the blend was heated under reflux at 60 °C for 5 h to assure the impregnation of nitrogen-containing precursors on CNTs. The ethanol was removed under vacuum forming black BTA/CNTs, TAPy/CNTs, and PyTZ/CNTs powders. The resulting powders were then placed for 2 h in a tube furnace under argon to remove any residual air before increasing the temperature. After that, the temperature was increased at a ramping rate of 5 °C $min^{-1}$ until the desired heat-treatment temperature was reached, held at this temperature for 2 h, followed by cooling to room temperature at a rate of 5 °C $min^{-1}$. Thus, the final NCNTs (BTA), NCNTs (TAPy), and NCNTs (PyTZ) catalysts were obtained.

*Characterizations.*

For X-ray photoelectron spectroscopy (XPS) a Kratos Analytical Axis Ultra DLD, using an Al Kα source monochromatized at 1486.6 eV was used. We used a hemispheric analyzer working at pass energy of 20 eV for N 1s core level.

The electrochemical characterizations were conducted in a single-compartment three electrode cell with a bipotentiostat (Model VSP Bio-Logic SAS, EC-Lab® V10.02 software) and rotation control unit (Princeton Applied Research Model 636). Saturated KCl calomel electrode (SCE, 0.241 V vs. NHE) and a graphite plate served as reference and counter electrode, respectively. All potentials are referenced to SCE.

A rotating ring disk electrode from Pine Instruments employing a glassy carbon (GC) disk (Ø 5 mm, A geom.=0.1963 $cm^2$) and Pt ring (Sring = 0.110 $cm^2$) was used as the working electrode.

The catalyst inks were prepared by dispersing 10 mg of each catalyst in ethanol (370 μL), $H_2O$ (150 μL) and of 5 wt% Nafion (80 μL) mixture under sonication (1h).

The catalyst layer was obtained by dropping 5 μL of the prepared ink onto the GC disk and dried under air environment to create a thin film. The final catalyst loading is 424.5 μg $cm^{-2}$. A commercial Pt (40 wt.%)/Vulcan (Pt/C) catalyst ink was used for comparison. 2 μL of Pt/C ink deposited on GC produce a catalyst loading of 203.7 μg $cm^{-2}$.

0.1 M KOH was the electrolyte in all of the studies, and prior to measurements the electrode was cycled in $N_2$-saturated solution until steady-state cyclic voltammetry was reached. $O_2$ was then bubbled for 30 min to achieve saturation. Under moderate $O_2$ bubbling, electrochemical measurements were conducted. CVs were recorded by scanning the disk potential from 0.2 to -0.9 V vs. SCE at a scan rate of 20 mV $s^{-1}$, RDE voltammograms were recorded at a scan rate of 5 $mVs^{-1}$ for different rotation rates (ω = 400, 800, 1200, 1600 and 2000 rpm), and RRDE measurements were conducted at 5 mV s-1 with a rotation speed of 800 rpm. The Pt ring was set at 0.456 V vs. SCE where the $H_2O_2$ formed on the disk during oxygen reduction is readily reoxidized.

RDE plots ($J_{lim}^{-1}$ vs. $\omega^{-1/2}$), were analyzed according to the Koutecky-Levich (K-L) equation expressed as Eq. 5 to assess the apparent number of electrons transferred during ORR (n) at various potentials:[29]

$$J_{app}^{-1} = J_k^{-1} + J_{\lim}^{-1} = 1/nFC_{O_2}k_{O_2}\Gamma + 1/0.62nFC_{O_2}D_{O_2}^{2/3}\nu^{-1/6}\omega^{1/2}$$

(5)

where $n$ can be extracted from the slope; $J_{app}$ is the measured or apparent current density; $J_k$ is the kinetic current density; Jlim is the limiting current density; $F$ is Faraday's constant (C $mol^{-1}$); $C_{O2}$ is the concentration of oxygen (mol $cm^{-3}$); $k_{O2}$ is the kinetic rate constant for the catalyzed ORR ($cm^2$ $s^{-1}$); Γ is the total surface coverage of the catalyst (mol $cm^{-2}$); $D_{O2}$ is the diffusion coefficient of oxygen in aqueous solution ($cm^2$ $s^{-1}$); $v$ is the kinematic viscosity ($cm^2$ $s^{-1}$); and ω is the rotation rate of the electrode (rad $s^{-1}$).[30,31]

n can be also calculated from the Eq. 6 based on RRDE measurements: [32]

$$n = (4I_D)/(I_D + (I_R/N)) \quad (6)$$

where $I_D$ is the absolute value of the current density at the disk, $I_R$ the absolute value of the current density at the ring. The value of the collection efficiency of the ring disk electrode was determined to be N = 0.257, using the one-electron $Fe(CN)_6^{3-/4-}$ redox couple, according to the manufacturer's instructions.

Discussion

In the development of carbon structures enriched in nitrogen, a very simple and low cost approach for the elaboration of efficient NCNTs catalysts is herein described (Scheme 1). For this, N-precursors as triazole and tetrazole derivatives with decomposition ability under heating process were chosen. These compounds with aromatic ring containing several nitrogen atoms release nitrogen upon heating to give highly reactive radicals which eventually lead to nitrogen-enriched CNTs.[22-24] Thus, heat-treatment of various metal-free nitrogen-containing precursors, e.g., 1H-benzotriazole (BTA), 1H-1,2,3-triazolo[4,5-b]pyridine (TAPy), and 5-(2-pyridyl)-1H-tetrazole (PyTZ), and multi-wall carbon nanotubes (CNTs) mixtures was realized at 700 °C under Ar atmosphere. Materials coming from BTA, TAPy and PyTZ were named NCNTs (BTA), NCNTs (TAPy) and NCNTs (PyTZ), respectively (Scheme 1).

Catalytic activity of NCNTs materials/Nafion films casted to a glassy carbon electrode were firstly evaluated by cyclic voltammetry (CV) in a three-electrode cell in 0.1 M KOH electrolyte. The modified carbon electrodes under $O_2$ conditions show an irreversible ORR peak potential ($E_{ORR}$) around -0.25 V that is not present under a $N_2$-saturated electrolyte (Figure 2). NCNTs (BTA) present the less negative $E_{ORR}$ (-0.251 V) compared to NCNTs (TAPy) and NCNTs (PyTZ) with -0.282 V and -0.306 V, respectively (Table 2). This is also much lower than the $E_{ORR}$ recorded with pristine MWNTs annealed at 700 °C that present a reduction peak at -0.394 V (Figure 7). Moreover, the current density corresponding to the reduction peak ($J_{ORR}$) for MWNTs is almost 4.5 times less than the NCNTs series which show $J_{ORR}$ of 2.25-2.50 mA $cm^{-2}$ for the same charge. Thus, NCNTs are clearly more active than CNTs, indicating the important role of the nitrogen atoms to create ORR active sites.

Since the nitrogen precursors present different structures (Figure 1) and the assignment of the electroactive sites is still controversial, the resulting NCNTs were analyzed by X-ray photoelectron spectroscopy (XPS) to analyze the chemical composition and assess the nature of nitrogen functional groups. The survey spectra of NCNTs shows mainly the presence of carbon, nitrogen and oxygen and no metal as iron, cobalt or platinum were detected (Figure 9). It is generally accepted that either pyridinic or quaternary type nitrogen atoms as well as surface defects such as edge planes are responsible for the ORR activity.[9,19] The N 1s spectra of NCNTs catalysts show four components (Figure

3). It suggests N atoms of different bonding types inserted into the CNTs network consistent with radical formations and rearrangements of nitrogen precursors during the annealing.[22-24] According to the observed binding energy, the NCNTs (BTA) catalyst presents (Figure 3) pyridinic-N at 398 eV (N1),[25, 26] nitrile groups at 399.1 eV (N2)[26, 27] pyrrolic-N at 400 eV (N3),[26] and quatemary-N (N4) at 401 eV.[26] Similarly, the decomposition gave four peaks for the two others catalysts, NCNTs (TAPy) and NCNTs PyTZ). The percentage of pyridinic structures (Table 1) of these latter two catalysts is higher than for the NCNTs (BTA), which may arise from the chemical structure of TAPy and PyTZ precursors which present initially a pyridine ring (Figure 1). However, the catalytic activities of the NCNTs do not depend of the amount of pydinic structures, but was recently linked to the amount of quaternary-N.[28] Thus, the NCNTs (BTA) with 25.7 % of quaternary-N present the best catalytic activity.

***Table 1.*** N 1s composition derived from XPS

| Peak | N-type | NCNTs (BTA) BE (eV) % | NCNTs (TAPy) BE (eV) % | NCNTs (PyTZ) BE (eV) % |
|---|---|---|---|---|
| N1 | pyridinic | 398 | 398 | 398.1 |
| | | 19.4 | 29.2 | 23.6 |
| N2 | nitrile | 399.1 | 399 | 399.1 |
| N3 | pyrrolic | 23.0 | 22.4 | 25.1 |
| N4 | quaternary | 400 | 400.1 | 400.1 |
| | | 31.9 | 25.2 | 28.7 |
| | | 401 | 401 | 401 |
| | | 25.7 | 23.2 | 22.6 |

The ORR polarization curves of NCNTs catalysts are shown in Figure 4a and Fig 8. The onset potentials of ORR ($E_{onset}$) on NCNTs are more positive than on CNTs but still negatively shifted from the value for Pt/C catalyst (Table 2). The $E_{onser}$ on NCNTs (BTA) is -0.163 V, thus corresponding to an overpotential ca. 80 mV higher than for Pt/C catalyst, consistent with previous results for nitrogen-doped carbon catalysts.[8, 28]

The kinetic current density reaches a plateau from -0.4 V for NCNTs catalysts which implies that ORR is diffusion-controlled. At 2000 rpm, the current density of NCNTs (BTA) is higher than those of NCNTs (TAPy) and NCNTs (PyTZ). The number of electrons transferred per oxygen molecule in the ORR process ($n$) and kinetic current densities ($J_k$) can be obtained from Koutecky-Levich (K-L) equation (Eq. 5). The $n$ value was found at 2.44 for CNTs and more than 3.5 for all NCNTs catalysts (Figure 4b, Table 2) indicating a $4e^-$ and $2e^-$ combined process in all cases (Equations 1-4), with a predominantly $4e^-$ transfer pathway for NCNTs. Like for the onset potential and the current density, NCNTs (BTA) catalyst presents the higher value of $n$. The obtained values of $J_k$ are close to those of the Pt/C, even about 1.2 times higher for NCNTs (BTA), which is an indication of the good ORR performance.

The values of $n$ calculated from experimental RRDE measurements (Figure 4, Table 2) are consistent with the results obtained from K-L plots. The half-wave potential ($E_{1/2}$) of NCNTs catalysts calculated from Figure 5 (disk electrode) is negatively shifted by 50-100 mV compared with Pt/C (Table 2).

***Table 2.*** Electrochemical parameters for ORR estimated from CV, RDE and RRDE measurements in 0.1 m KOH electrolyte

| Sample | $n$[a] | $n$[b] | $J_k$[b]* ($mAcm^{-2}$) | $E_{1/2}$[b] (V) | $E_{onset}$[c] (V) | $E_{ORR}$[d] (V) |
|---|---|---|---|---|---|---|
| CNTs | 2.4 | | 1.9 | -0.37 | -0.323 | -0.394 |
| | 4 | | | 3 | | |
| NCNTs | 3.6 | 3.5 | 6.8 | -0.20 | -0.163 | -0.251 |
| (BTA) | 2 | 0 | 5.2 | 8 | -0.188 | -0.282 |
| NCNTs | 3.5 | 3.3 | 5.7 | -0.24 | -0.195 | -0.306 |
| (TAPy) | 1 | 2 | 5.8 | 5 | -0.085 | - |
| NCNTs | 3.5 | 3.3 | | -0.24 | | |
| (PyTZ) | 5 | 1 | | 6 | | |
| Pt/C | 3.9 | 3.7 | | -0.15 | | |
| | 2 | 5 | | 5 | | |

[a]. from Fig. 3b, *at -0.5 V; [b]. from Fig. 4; [c]. from Fig. 3a and Fig S2; [d]. from Fig. 2

The results of our study are in agreement with previous reports which consider ORR as a catalytic regenerative process. Maldonado and Stevenson[9] reported *n* >3 and the bifunctionality of nitrogen-doped carbon nanofiber (NCNFs) catalysts obtained by CVD method from ferrocene, xylene and pyridine precursors. Also, Wang et. al[8] reported *n* = 2.6 and the same ORR mechanism for NCNTs obtained by a CVD method using cyclohexane and urea precursors. Gong et al.[10] reported the direct 4e$^-$ process of oxygen reduction with NCNTs catalysts prepared from the pyrolysis of iron(II)phthalocyanine. Hence, the nature of the nitrogen precursors and the synthetic route clearly influence the final catalytic properties.

To evaluate the stability of the NCNTs catalysts in alkaline medium, continuous voltammograms were conducted with a scan rate of 10 mV $s^{-1}$ in $O_2$-saturated 1 M KOH. Even after 200 cycles (Figure 6a), i.e. approximately 14 h with a continuous rotation at 500 rpm, no significant decay on the $E_{1/2}$ reduction ORR potentials and a current density decrease of only of 10% were observed.

A methanol crossover test was also performed in the chronoamperometric measurements. The corresponding amperometric response at a constant voltage of -0.35 V under experimental conditions (Figure 6b) suggests the remarkably good tolerance of NCNTs (BTA) catalyst to methanol crossover effect, while Pt/C was prone to deactivation because of CO poisoning.

To sum up, a simple method based on the heat-treatment at 700°C under argon of N-containing precursors (BTA, TAPy, PyTZ) and CNTs was applied to produce carbon structures enriched in nitrogen for the reduction of oxygen in alkaline media. The most efficient NCNTs catalysts is the one obtained with BTA precursor with only 80 mV of overpotential compare to Pt/C for a current density comparable or even better. Thus, it suggests that they are sustainable and cheap solution to replace Pt/C for further AFCs development. The catalysts also show also an excellent tolerance to methanol oxidation which is not the case for Pt/C catalysts. Thus, tuning the type and amount of nitrogen in NCNTs is a viable alternative for metal-free electrode catalysts for ORR.

REFERENCES

[1] G. Lota, K. Fic, E. Frackowiak, Energy Environ. Sci. 2011, 4, 1592-1605.

[2] M. Terrones, A. G. Souza Filho, A. M. Rao in Carbon Nanotubes (Eds: A. Jorio, G. Dresselhaus, M. S. Dresselhaus), Topics Appl. Physics 111, Springer-Verlag Berlin Heidelberg, 2008, pp. 531-566

[3] P. Ayala, R. Arenal, M. Rummeli, A. Rubio, T. Pichler, Carbon 2010, 48, 575-586.

[4] S. Kundu, T. C. Nagaiah, W. Xia, Y. Wang, S. van Dommele, J. H. Bitter, M. Santa, G. Grundmeier, M. Bron, W. Schuhmann, M. Muhler, J. Phys. Chem. C 2009, 113, 14302-14310

[5] S. Shanmugam, T. Osaka, Chem. Commun. 2011, 47, 4463-4465

[6] D. Sheng Su, J. Zhang, B. Frank, A. Thomas, X. Wang, J. Paraknowitsch, R. Schlögl, ChemSusChem 2010, 3, 169-180

[7] R. Liu, D. Wu, X. Feng, K. Müllen, Angew. Chem. Int. Ed. 2010, 49, 2565-2569

[8] Z. Wang, R. Jia, J. Zheng, J. Zhao, L. Li, J. Song, Z. Zhu, ACS Nano 2011, 5, 1677-1684

[9] S. Maldonado, S. Morin and K. J. Stevenson, J Phys. Chem. B 2005, 109, 4707-4716

[10] K. Gong, F. Du, Z. Xia, M. Durstock, L. Dail, Science 2009, 323, 760-764

[11]H. Yang, Angew. Chem. Int. Ed. 2011, 50, 2674-2676

[12] S.-H. Chang, W.-N. Su, M.-H. Yeh, C.-J. Pan, K.-Li Yu, D.-G. Liu, J.-F. Lee, B.-J. Hwang, Chem. Eur. J. 2010, 16, 11064-11071

[13] C.P. Ewels, A. Gloter, T. Minea, B. Bouchet-Fabre, S. Point, C. Colliex, Eur. Phys. J. Appl. Phys. 2008, 42, 247-250

[14] S. Cui, P. Scharff, C. Siegmund, D. Schneider, K. Risch, S. Klotzer, L. Spiess, H. Romanus, J. Schawohl, Carbon 2004, 42, 931-939

[15] Y. Zhang, H. Gu, K. Suenaga, S. Iijima, Chem. Phys. Lett. 1997, 279, 264-269

[16]T. Maiyalagan and B. Viswanathan, Mater. Chem. Phys. 2005, 93, 291-295

[17] J. Jang, J. H. Oh, Chem. Commun. 2004, 7, 882-883

[18] M. Pumera, Langmuir 2007, 23, 6453-6458

[19] S. Kundu, W. Xia, W. Busser, M. Becker, D. A. Schmidt, M. Havenith, M.Muhler, Phys. Chem. Chem. Phys. 2010, 12, 4351-4359

[20] K. Yamamoto, T. Kamimura, K. Matsumoto, Jpn. J. Appl. Phys. 2005, 44, 1611-1614

[21] C. Jin, T. Nagaiah, W. Xia, B. Spliethoff, S. Wang, M. Bron, W. Schuhmann, M. Muhler, Nanoscale 2010, 2, 981-987

[22] A. McCluskey, C. Wentrup, J. Org. Chem. 2008, 73, 6265-6267

[23] C. Wentrup, W. D. Crow, Tetrahedron 1970, 26, 3965-3981

[24] G. 1. Koldobskii, V. A. Ostrovskii, V. S. Popavskii, CHC 1981, 17, 965-989
[24a]. Li J. Carbon based-sensors. In: Serp P, Figueiredo JL, editors. Carbon materials for catalysis, New Jersey; Wiley; 2009 p. 507-534.
[24b]. Peigney A, Laurent C, Flahaut E, Bacsa RR, Rousset A. Specific surface area of carbon nanotubes and bundles of carbon nanotubes, Carbon 2001; 39: 507-514.
[24c]. Ducastelle F, Blase X, Bonard JM, Charlier JCh, Petit P. Electronic structure. In: A. Loiseau, editor. Understanding carbon nanotubes: from basics to applications, Berlin; Springer; 2006 p. 199-276.
[25] U. 1. Kramm, I. Abs-Wurmbach, I. Herrmann-Geppert, J. Radnik, S. Fiechter, P. Bogdanoff, J. Electrochem. Soc. 2011, 158, B69-B78
[26] F. Jaouen, J. Herranz, M. Lefevre, J. P. Dodelet, U. I. Kramm, I. Herrmann, P. Bogdanoff, J. Maruyama, T. Nagaoka, A. Garsuch, J. R. Dahn, T. Olson, S. Pylypenko, P. Atanassov, E. A. Ustinov, Appl. Mater. Interf. 2009, 1, 1623-1639
[27] H. Riascos, J. Neidhardt, G.Z. Radnoczi, J. Emmerlich, G. Zambrano, L. Hultman, P. Prieto, Thin Solid Films 2006, 497, 1-6
[28] D. Geng, Y. Chen, Y. Chen, Y Li, R. Li, X. Sun, S.Ye, S. Knights, Energy Environ. Sci. 2011, 4, 760-764
[29]. Bard, A. J.; Faulken, L. R. Electrochemical Methods: Fundamental and Applications, Wiley: New York, 2001.
[30]. D. Geng, Y. Chen, Y. Chen, Y. Li, R. Li, X. Sun, S. Ye, S. Knights, Energy Environ. Sci. 2011, 4, 760-764.
[31]. R. E. Davis, G. L. Horvath and C. W. Tobias, Electrochim. Acta 1967, 12, 287.
[32]. Lefevre, M.; Dodelet, J.-P. Electrochim. Acta, 2003, 48, 2749-2760.

## Claims

1. A method for preparing metal-free nitrogen-containing carbon nanotubes (NCNTs) said method comprising the steps consisting of :

    i) Impregnating carbon nanotubes (CNTs) with a solvent comprising a nitrogen-containing precursor dissolved therein, said nitrogen-containing precursor comprising an heteroaryl group in which the ring portion contains at least one nitrogen atom covalently bound to two other nitrogen atoms ;
    ii) Recovering and annealing the obtained impregnated CNTs in conditions of temperature and pressure allowing to obtain the withdrawal of $N_2$ and the formation of radicals, thereby obtaining metal-free nitrogen-containing carbon nanotubes (NCNTs).

2. The method of claim 1, wherein the heteroaryl group is a polyazole.

3. The method of any of the preceding claims, wherein the nitrogen-containing precursor is selected from 1H-benzotriazole (BTA), 1H-1,2,3-triazolo[4,5-b]pyridine (TAPy), 5-(2-pyridyl)-1H-tetrazole (PyTZ) and [1,2,3]triazolo[1,5-a]pyridine (TAP).

4. The method of any of the preceding claims, wherein the CNTs are multi-walls CNTs (MTCNTs) or double-walls CNTs.

5. The method of any of the preceding claims, wherein the CNTs have a conductivity comprised in the range of $10^{-2}$ S/cm and $10^{4}$S/cm.

6. The method of any of the preceding claims, wherein in step i), the weight ratio of the nitrogen-containing precursor relative to the CNTs is in the range of 1,5/1 to 3/1, preferably of about 2/1.

7. The method of any of the preceding claims, wherein the solvent is an alcohol, preferably ethanol,or butanol.

8. The method of any of the preceding claims, wherein step i) is performed under reflux conditions.

9. The method of any of the preceding claims, wherein in step ii), the obtained impregnated CNTs are recovered by evaporating the solvent under a reduced pressure.

10. The method of any of the preceding claims, wherein in step ii), the recovered impregnated CNTs are annealed at a temperature in the range of 600°C to 800°C, preferably of about 700°C.

11. A use of a nitrogen-containingprecursor for modifying carbon-nanotubes according to the method of any of claims

1 to 10, said nitrogen-containing precursor comprising an heteroaryl group in which the ring portion contains at least one nitrogen atom covalently bound to two other nitrogen atoms.

## Patentansprüche

1. Verfahren zum Herstellen von metallfreien, stickstoffhaltigen Kohlenstoffnanoröhrchen (NCNTs), wobei das Verfahren die folgenden Schritte umfasst:

    i) Imprägnieren von Kohlenstoffnanoröhrchen (CNTs) mit einem Lösungsmittel, das einen darin gelösten stickstoffhaltigen Vorläufer umfasst, wobei der stickstoffhaltige Vorläufer eine Heteroarylgruppe umfasst, in welcher der Ringabschnitt mindestens ein an zwei andere Stickstoffatome kovalent gebundenes Stickstoffatom enthält;
    ii) Gewinnen und Ausglühen der erhaltenen CNTs unter Temperatur- und Druckbedingungen, bei denen das Entziehen von $N_2$ und die Bildung von Radikalen ermöglicht wird, wodurch metallfreie, stickstoffhaltige Kohlenstoffnanoröhrchen (NCNTs) erhalten werden.

2. Verfahren nach Anspruch 1, wobei die Heteroarylgruppe ein Polyazol ist.

3. Verfahren nach einem der vorangehenden Ansprüche, wobei der stickstoffhaltige Vorläufer ausgewählt ist aus 1H-Benzotriazol (BTA), 1H-1,2,3-Triazol[4,5-b]pyridin (TAPγ), 5-(2-Pyridyl)-1H-tetrazol (PyTZ) und [1,2,3]Triazol[1,5-a]pyridin (TAP).

4. Verfahren nach einem der vorangehenden Ansprüche, wobei die CNTs mehrwandige CNTs (MTCNTs) oder doppelwandige CNTs sind.

5. Verfahren nach einem der vorangehenden Ansprüche, wobei die CNTs eine Leitfähigkeit aufweisen, die den Bereich von $10^{-2}$ S/cm und $10^4$ S/cm umfasst.

6. Verfahren nach einem der vorangehenden Ansprüche, wobei in Schritt i) das Gewichtsverhältnis des sückstoffhaltigen Vorläufers in Bezug auf die CNTs im Bereich von 1,5/1 bis 3/1, vorzugsweise von etwa 2/1 liegt.

7. Verfahren nach einem der vorangehenden Ansprüche, wobei das Lösungsmittel ein Alkohol, vorzugsweise Ethanol oder Butanol, ist.

8. Verfahren nach einem der vorangehenden Ansprüche, wobei Schritt i) unter Rückflussbedingungen durchgeführt wird.

9. Verfahren nach einem der vorangehenden Ansprüche, wobei in Schritt ii) die erhaltenen imprägnierten CNTs durch Abdampfen des Lösungsmittels unter reduziertem Druck gewonnen werden.

10. Verfahren nach einem der vorangehenden Ansprüche, wobei in Schritt ii) die gewonnenen imprägnierten CNTs bei einer Temperatur im Bereich von 600°C bis 800°C, vorzugsweise von etwa 700°C, ausgeglüht werden.

11. Verwendung eines stickstoffhaltigen Vorläufers zum Modifizieren von Kohienstoffnanoröhrchen gemäß dem Verfahren nach einem der Ansprüche 1 bis 10, wobei der stickstoffhaltige Vorläufer eine Heteroarylgruppe umfasst, in welcher der Ringabschnitt mindestens ein an zwei andere Stickstoffatome kovalent gebundenes Stickstoffatom enthält.

## Revendications

1. Procédé de préparation de nanotubes de carbone contenant de l'azote et dépourvus de métaux (NCNT), ledit procédé comprenant les étapes consistant à :

    i) imprégner des nanotubes de carbone (CNT) avec un solvant comprenant un précurseur contenant de l'azote dissous dans celui-ci, ledit précurseur contenant de l'azote comprenant un groupe hétéroaryle dans lequel la partie cyclique contient au moins un atome d'azote lié par covalence à deux autres atomes d'azote ;
    ii) récupérer et recuire les CNT imprégnés obtenus dans des conditions de température et de pression permettant

d'obtenir l'élimination de $N_2$ et la formation de radicaux, des nanotubes de carbone contenant de l'azote dépourvus de métaux (NCNT) étant ainsi obtenus.

**2.** Procédé selon la revendication 1, dans lequel le groupe hétéroaryle est un polyazole.

**3.** Procédé selon l'une quelconque des revendications précédentes, dans lequel le précurseur contenant de l'azote est choisi parmi le 1H-benzotriazole (BTA), la 1H-1,2,3-triazolo[4,5-b]pyridine (TAPy), le 5-(2-pyridyl)-1H-tétrazole (PyTZ) et la [1,2,3]triazolo[l,5-a]pyridine (TAP).

**4.** Procédé selon l'une quelconque des revendications précédentes, dans lequel les CNT sont des CNT à plusieurs parois (MTCNT) ou des CNT à doubles parois.

**5.** Procédé selon l'une quelconque des revendications précédentes, dans lequel les CNT ont une conductivité comprise dans la plage de $10^{-2}$ S/cm à $10^{4}$ S/cm.

**6.** Procédé selon l'une quelconque des revendications précédentes, dans lequel, à l'étape i), le rapport pondéral du précurseur contenant de l'azote aux CNT est dans la plage de 1,5/1 à 3/1, de préférence d'environ 2/1.

**7.** Procédé selon l'une quelconque des revendications précédentes, dans lequel le solvant est un alcool, de préférence l'éthanol ou le butanol.

**8.** Procédé selon l'une quelconque des revendications précédentes, dans lequel l'étape i) est réalisée dans des conditions de reflux.

**9.** Procédé selon l'une quelconque des revendications précédentes, dans lequel, dans l'étape ii), les CNT imprégnés obtenus sont récupérés par évaporation du solvant sous pression réduite.

**10.** Procédé selon l'une quelconque des revendications précédentes, dans lequel, dans l'étape ii), les CNT imprégnés récupérés sont recuits à une température dans la plage de 600°C à 800°C, de préférence d'environ 700°C.

**11.** Utilisation d'un précurseur contenant de l'azote pour modifier des nanotubes de carbone par le procédé selon l'une quelconque des revendications 1 à 10, ledit précurseur contenant de l'azote comprenant un groupe hétéroaryle dans lequel la partie cyclique contient au moins un atome d'azote lié par covalence à deux autres atomes d'azote.

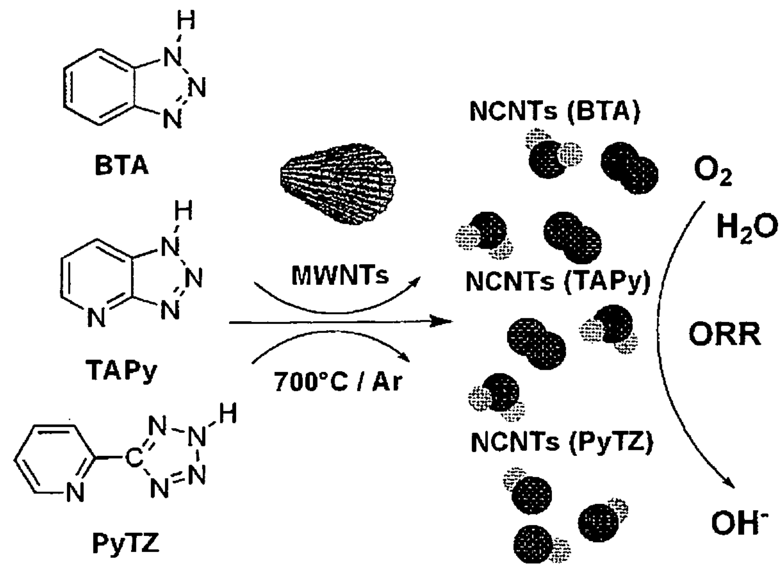


Figure 1

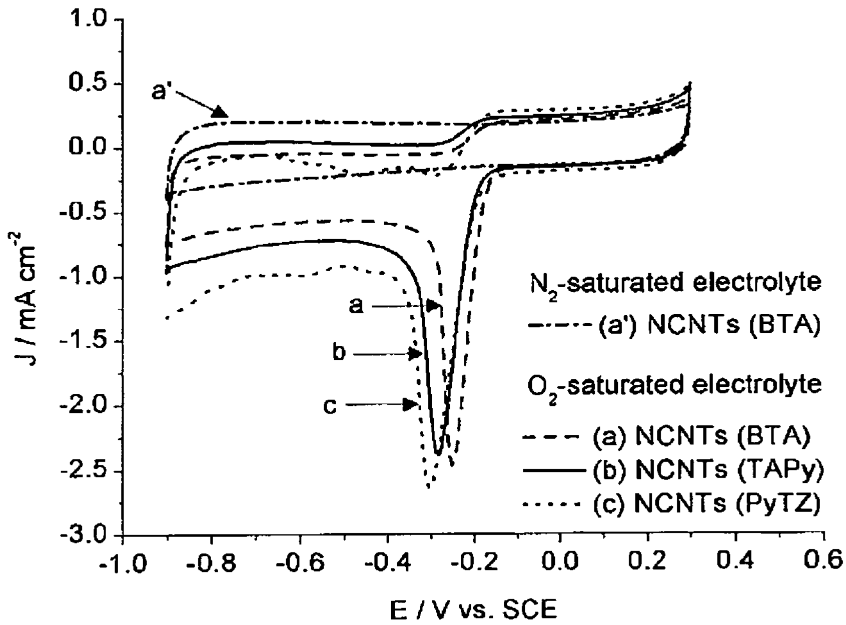


Figure 2

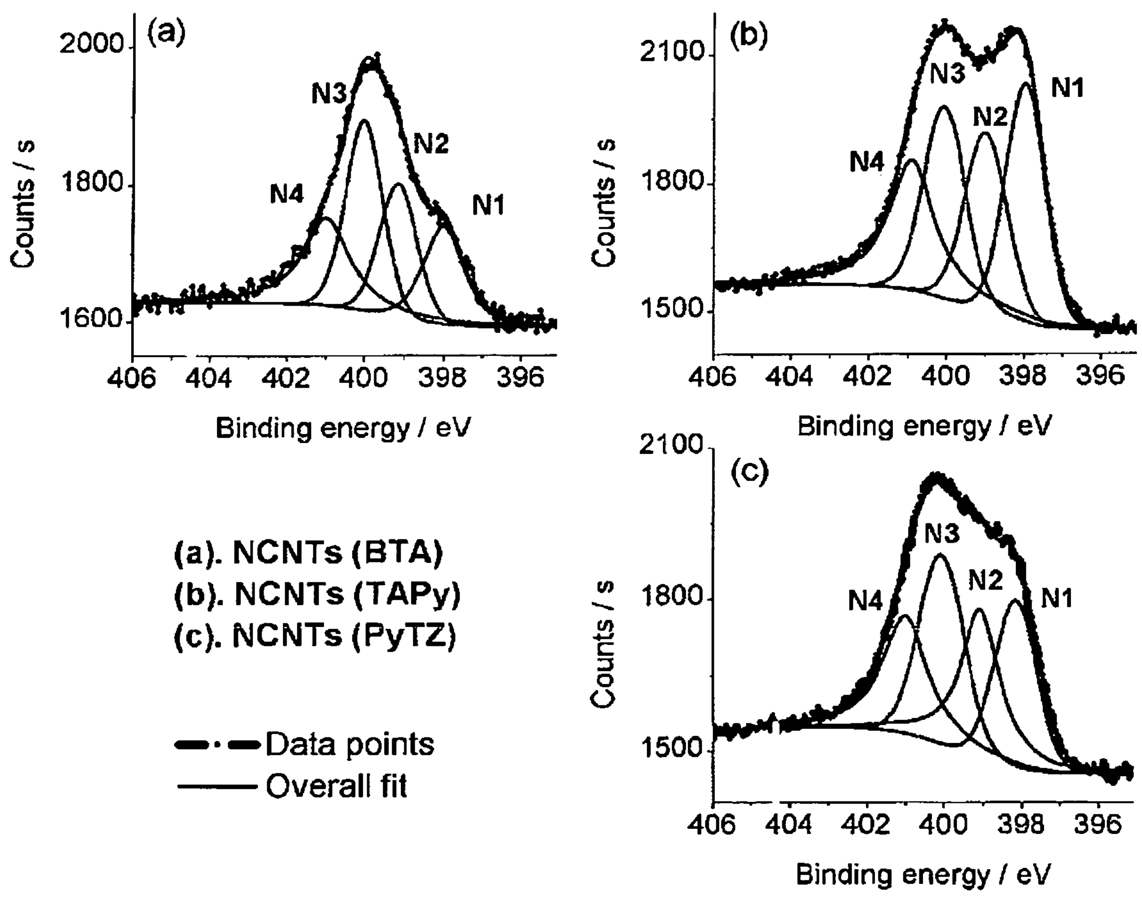
(a)
2000
1800
1600
Counts / s
N1
N2
N3
N4
406 404 402 400 398 396
Binding energy / eV
(b)
2100
1800
1500
Counts / s
N1
N2
N3
N4
406 404 402 400 398 396
Binding energy / eV
(c)
2100
1800
1500
Counts / s
N1
N2
N3
N4
406 404 402 400 398 396
Binding energy / eV
(a). NCNTs (BTA)
(b). NCNTs (TAPy)
(c). NCNTs (PyTZ)
Data points
Overall fit

Figure 3

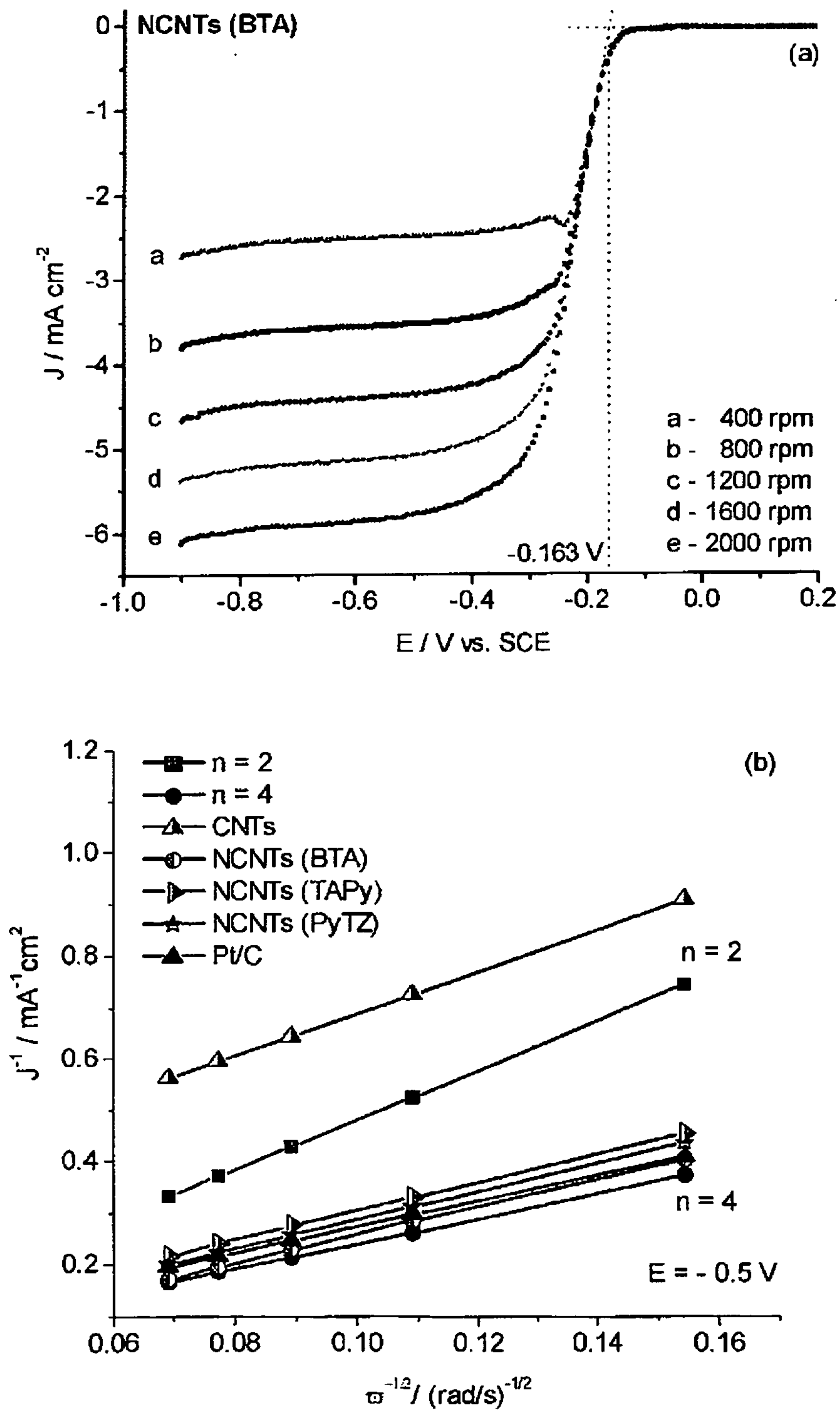
NCNTs (BTA)
(a)
J / mA cm-2
E / V vs. SCE
-0.163 V
a - 400 rpm
b - 800 rpm
c - 1200 rpm
d - 1600 rpm
e - 2000 rpm
(b)
n = 2
n = 4
CNTs
NCNTs (BTA)
NCNTs (TAPy)
NCNTs (PyTZ)
Pt/C
E = - 0.5 V
J-1 / mA-1cm2
ϖ-1/2 / (rad/s)-1/2

Figure 4

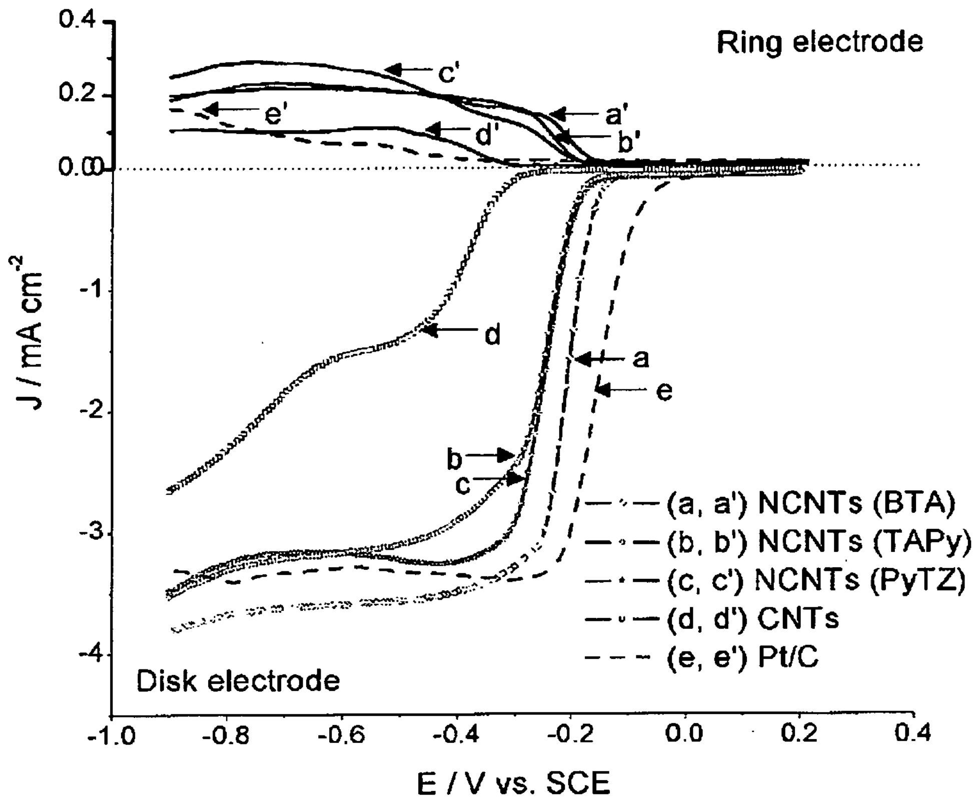
Ring electrode
Disk electrode
0.4
0.2
0.00
-1
-2
-3
-4
J / mA cm-2
-1.0
-0.8
-0.6
-0.4
-0.2
0.0
0.2
0.4
E / V vs. SCE
a'
b'
c'
d'
e'
a
b
c
d
e
(a, a') NCNTs (BTA)
(b, b') NCNTs (TAPy)
(c, c') NCNTs (PyTZ)
(d, d') CNTs
(e, e') Pt/C

Figure 5

a)

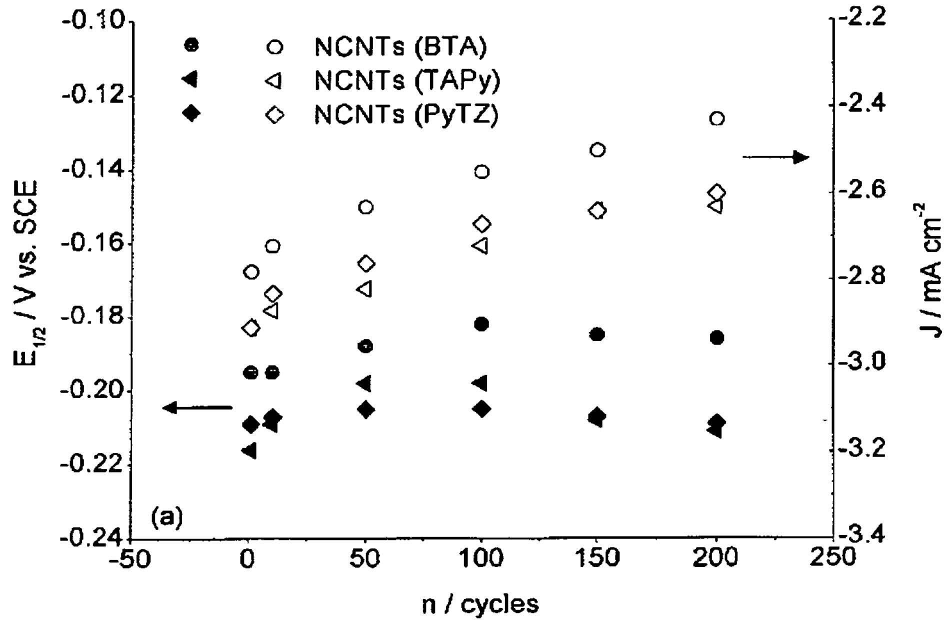

NCNTs (BTA)
NCNTs (TAPy)
NCNTs (PyTZ)
$E_{1/2}$ / V vs. SCE
J / mA $cm^{-2}$
n / cycles
(a)


b)

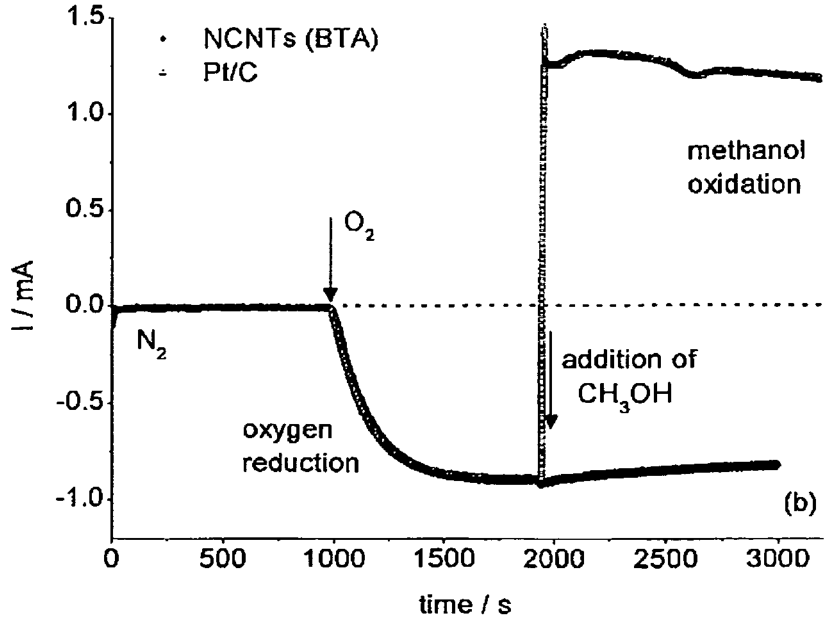

NCNTs (BTA)
Pt/C
I / mA
time / s
$O_2$
$N_2$
methanol oxidation
addition of $CH_3OH$
oxygen reduction
(b)


Figure 6

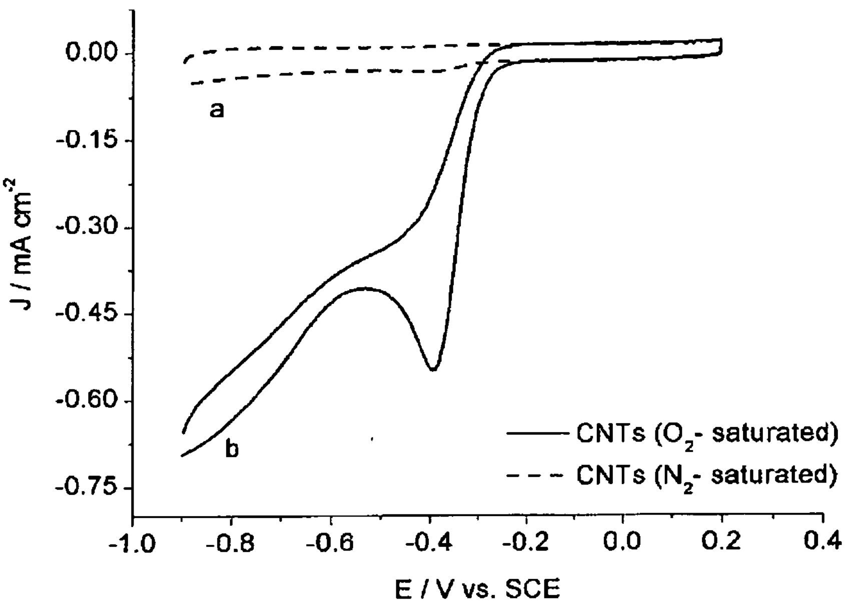
0.00
-0.15
-0.30
-0.45
-0.60
-0.75
J / mA cm-2
a
b
CNTs (O2- saturated)
CNTs (N2- saturated)
-1.0
-0.8
-0.6
-0.4
-0.2
0.0
0.2
0.4
E / V vs. SCE

Figure 7

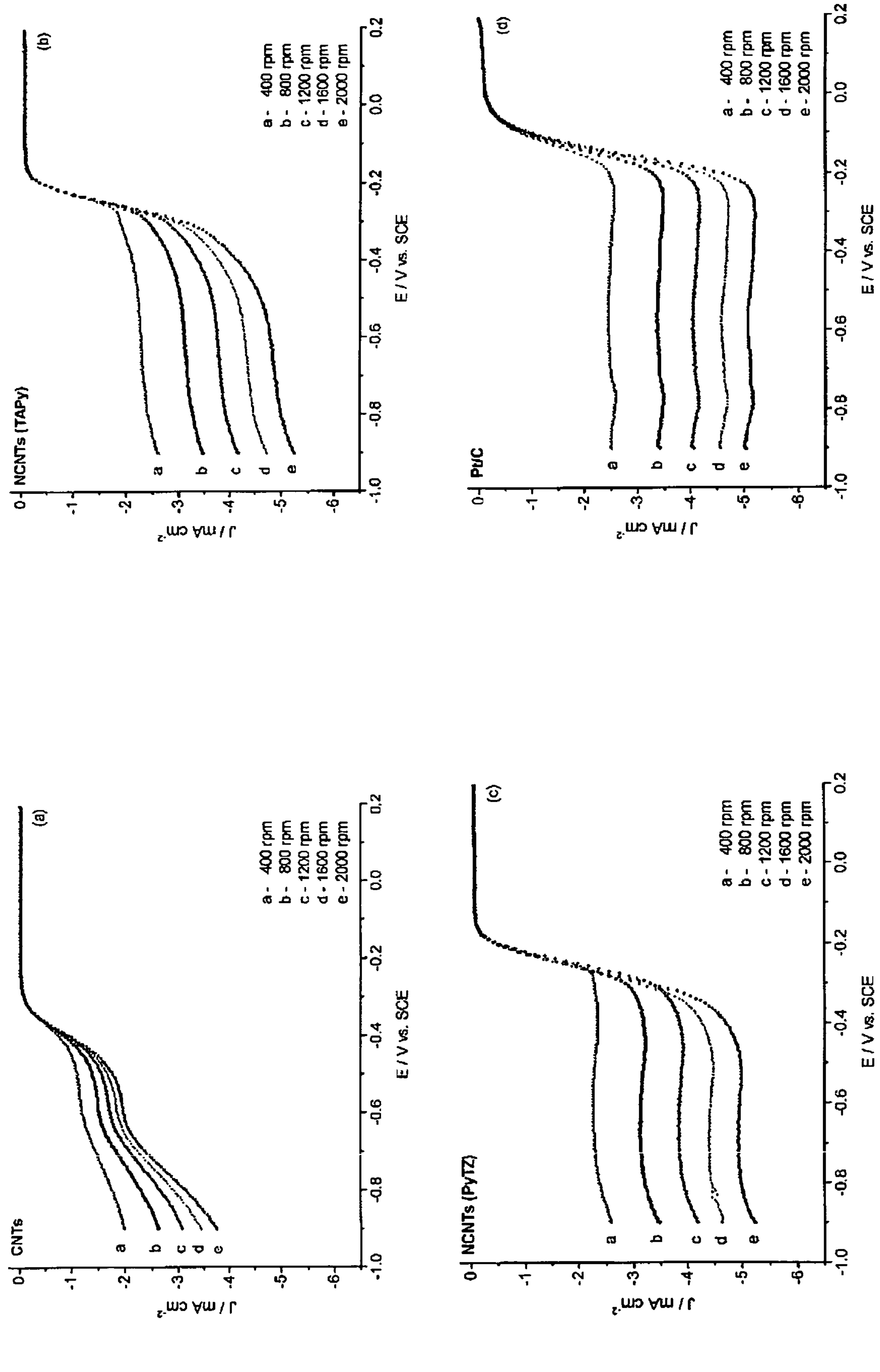
CNTs
(a)
NCNTs (TAPy)
(b)
NCNTs (PyTZ)
(c)
Pt/C
(d)
a - 400 rpm
b - 800 rpm
c - 1200 rpm
d - 1600 rpm
e - 2000 rpm
J / mA cm-2
E / V vs. SCE

Figure 8

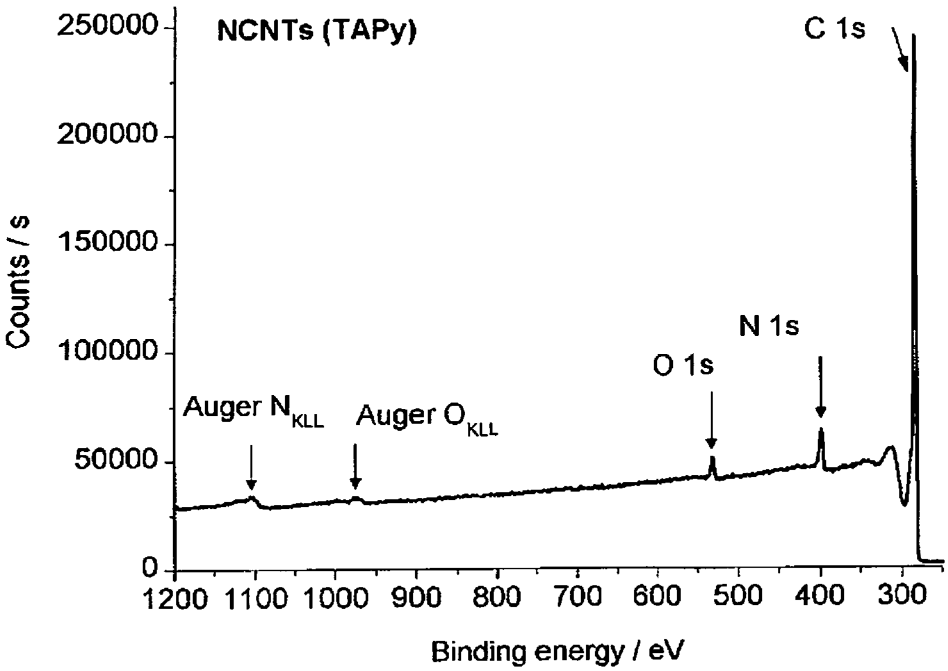

NCNTs (TAPy)
C 1s
N 1s
O 1s
Auger $N_{KLL}$
Auger $O_{KLL}$
Counts / s
250000
200000
150000
100000
50000
0
1200 1100 1000 900 800 700 600 500 400 300
Binding energy / eV


Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **G. LOTA ; K. FIC ; E. FRACKOWIAK.** *Energy Environ. Sci.,* 2011, vol. 4, 1592-1605
- Carbon Nanotubes. **M. TERRONES ; A. G. SOUZA FILHO ; A. M. RAO.** Topics Appl. Physics. Springer-Verlag, 2008, vol. 111, 531-566
- **P. AYALA ; R. ARENAL ; M. RUMMELI ; A. RUBIO ; T. PICHLER.** *Carbon,* 2010, vol. 48, 575-586
- **S. KUNDU ; T. C. NAGAIAH ; W. XIA ; Y. WANG ; S. VAN DOMMELE ; J. H. BITTER ; M. SANTA ; G. GRUNDMEIER ; M. BRON ; W. SCHUHMANN.** *J. Phys. Chem. C,* 2009, vol. 113, 14302-14310
- **S. SHANMUGAM ; T. OSAKA.** *Chem. Commun.,* 2011, vol. 47, 4463-4465
- **D. SHENG SU ; J. ZHANG ; B. FRANK ; A. THOMAS ; X. WANG ; J. PARAKNOWITSCH ; R. SCHLÖGL.** *ChemSusChem,* 2010, vol. 3, 169-180
- **R. LIU ; D. WU ; X. FENG ; K. MÜLLEN.** *Angew. Chem. Int. Ed.,* 2010, vol. 49, 2565-2569
- **Z. WANG ; R. JIA ; J. ZHENG ; J. ZHAO ; L. LI ; J. SONG ; Z. ZHU.** *ACS Nano,* 2011, vol. 5, 1677-1684
- **S. MALDONADO ; S. MORIN ; K. J. STEVENSON.** *J Phys. Chem. B,* 2005, vol. 109, 4707-4716
- **K. GONG ; F. DU ; Z. XIA ; M. DURSTOCK ; L. DAIL.** *Science,* 2009, vol. 323, 760-764
- **H. YANG.** *Angew. Chem. Int. Ed.,* 2011, vol. 50, 2674-2676
- **S.-H. CHANG ; W.-N. SU ; M.-H. YEH ; C.-J. PAN ; K.-LI YU ; D.-G. LIU ; J.-F. LEE ; B.-J. HWANG.** *Chem. Eur. J.,* 2010, vol. 16, 11064-11071
- **C.P. EWELS ; A. GLOTER ; T. MINEA ; B. BOUCHET-FABRE ; S. POINT ; C. COLLIEX.** *Eur. Phys. J. Appl. Phys.,* 2008, vol. 42, 247-250
- **S. CUI ; P. SCHARFF ; C. SIEGMUND ; D. SCHNEIDER ; K. RISCH ; S. KLOTZER ; L. SPIESS ; H. ROMANUS ; J. SCHAWOHL.** *Carbon,* 2004, vol. 42, 931-939
- **Y. ZHANG ; H. GU ; K. SUENAGA ; S. IIJIMA.** *Chem. Phys. Lett.,* 1997, vol. 279, 264-269
- **T. MAIYALAGAN ; B. VISWANATHAN.** *Mater. Chem. Phys.,* 2005, vol. 93, 291-295
- **J. JANG ; J. H. OH.** *Chem. Commun.,* 2004, vol. 7, 882-883
- **M. PUMERA.** *Langmuir,* 2007, vol. 23, 6453-6458
- **S. KUNDU ; W. XIA ; W. BUSSER ; M. BECKER ; D. A. SCHMIDT ; M. HAVENITH ; M.MUHLER.** *Phys. Chem. Chem. Phys.,* 2010, vol. 12, 4351-4359
- **K. YAMAMOTO ; T. KAMIMURA ; K. MATSUMOTO.** *Jpn. J. Appl. Phys.,* 2005, vol. 44, 1611-1614
- **C. JIN ; T. NAGAIAH ; W. XIA ; B. SPLIETHOFF ; S. WANG ; M. BRON ; W. SCHUHMANN ; M. MUHLER.** *Nanoscale,* 2010, vol. 2, 981-987
- **A. MCCLUSKEY ; C. WENTRUP.** *J. Org. Chem.,* 2008, vol. 73, 6265-6267
- **C. WENTRUP ; W. D. CROW.** *Tetrahedron,* 1970, vol. 26, 3965-3981
- **G. 1. KOLDOBSKII ; V. A. OSTROVSKII ; V. S. POPAVSKII.** *CHC,* 1981, vol. 17, 965-989
- **LI J. CARBON.** Carbon materials for catalysis. Wiley, 2009, 507-534
- **PEIGNEY A ; LAURENT C ; FLAHAUT E ; BACSA RR ; ROUSSET A.** Specific surface area of carbon nanotubes and bundles of carbon nanotubes. *Carbon,* 2001, vol. 39, 507-514
- Electronic structure. **DUCASTELLE F ; BLASE X ; BONARD JM ; CHARLIER JCH ; PETIT P.** Understanding carbon nanotubes: from basics to applications. Springer, 2006, 199-276
- **U. 1. KRAMM ; I. ABS-WURMBACH ; I. HERRMANN-GEPPERT ; J. RADNIK ; S. FIECHTER ; P. BOGDANOFF.** *J. Electrochem. Soc.,* 2011, vol. 158, B69-B78
- **F. JAOUEN ; J. HERRANZ ; M. LEFEVRE ; J. P. DODELET ; U. I. KRAMM ; I. HERRMANN ; P. BOGDANOFF ; J. MARUYAMA ; T. NAGAOKA ; A. GARSUCH.** *Appl. Mater. Interf.,* 2009, vol. 1, 1623-1639
- **H. RIASCOS ; J. NEIDHARDT ; G.Z. RADNOCZI ; J. EMMERLICH ; G. ZAMBRANO ; L. HULTMAN ; P. PRIETO.** *Thin Solid Films,* 2006, vol. 497, 1-6
- **D. GENG ; Y. CHEN ; Y. CHEN ; Y LI ; R. LI ; X. SUN ; S.YE ; S. KNIGHTS.** *Energy Environ. Sci.,* 2011, vol. 4, 760-764
- **BARD, A. J. ; FAULKEN, L. R.** Electrochemical Methods: Fundamental and Applications. Wiley, 2001
- **D. GENG ; Y. CHEN ; Y. CHEN ; Y. LI ; R. LI ; X. SUN ; S. YE ; S. KNIGHTS.** *Energy Environ. Sci.,* 2011, vol. 4, 760-764

- **R. E. DAVIS ; G. L. HORVATH ; C. W. TOBIAS.** *Electrochim. Acta,* 1967, vol. 12, 287
- **LEFEVRE, M. ; DODELET, J.-P.** *Electrochim. Acta,* 2003, vol. 48, 2749-2760